# EUROPÄISCHE PATENTSCHRIFT

(11) **EP 3 032 956 B1**
(45) Veröffentlichungstag und Bekanntmachung des Hinweises auf die Patenterteilung: **17.05.2017**
(21) Anmeldenummer: 14747890.3
(22) Anmeldetag: 30.07.2014
(51) Int. Cl.: A23L 3/01, A23B 4/015, A23L 13/60, A22C 11/00, A23L 5/10

(54) **VERFAHREN UND VORRICHTUNG ZUR BEHANDLUNG EINES LEBENSMITTELS MITTELS ERHITZUNG**
METHOD AND DEVICE FOR TREATING FOOD BY MEANS OF A HEATING PROCESS
PROCÉDÉ ET DISPOSITIF POUR TRAITER UN PRODUIT ALIMENTAIRE PAR LE CHAUFFAGE

(30) Priorität: 16.08.2013 DE 102013013668; 06.12.2013 DE 102013020411; 13.03.2014 DE 102014003649; 14.04.2014 DE 102014005493; 09.07.2014 DE 102014010166
(43) Veröffentlichungstag der Anmeldung: 22.06.2016
(73) Patentinhaber: Triton GmbH, 14089 Berlin (DE); Deutsches Institut für Lebensmitteltechnik e.V., 49610 Quakenbrück (DE)
(72) Erfinder: KORTSCHACK, Fritz, 14089 Berlin (DE); GR. KOHORST, Werner, 49413 Dinklage (DE)
(74) Vertreter: Kruspig, Volkmar
(86) Internationale Anmeldenummer: PCT/EP2014/066370
(87) Internationale Veröffentlichungsnummer: WO 2015/022189

(56) Entgegenhaltungen:
- WO-A1-02/102215
- "Ohmic Chef", , 28. Dezember 2007 (2007-12-28), XP054975711, Gefunden im Internet: URL:https://www.youtube.com/watch?v=HH4r-L icNvE [gefunden am 2015-02-04]
- Gabriel Piette ET AL: "IS THERE A FUTURE FOR OHMIC COOKING IN MEAT PROCESSING ?", , 31. Mai 2001 (2001-05-31), XP055167115, Gefunden im Internet: URL:http://cmsa-ascv.ca/documents/2001May- 01Piettepgs8-10.pdf [gefunden am 2015-02-04]
- L. ZHANG ET AL: "Food sterilization by electrical heating: Sensitivity to process parameters", AICHE JOURNAL, Bd. 40, Nr. 5, 1. Mai 1994 (1994-05-01), Seiten 888-898, XP055167097, ISSN: 0001-1541, DOI: 10.1002/aic.690400515

## Beschreibung

Die Erfindung betrifft ein Verfahren zur Behandlung eines Lebensmittels, insbesondere einer Wurst, mittels nichtkonventioneller, insbesondere Ohm'scher Erhitzung.

Die konduktive Erhitzung, auch Ohm'sche Erhitzung genannt, stellt eine industrietaugliche Alternative zur klassischen Erhitzung von Lebensmitteln dar. Das Funktionsprinzip dieses elektrothermischen Verfahrens beruht auf der direkten Durchleitung von Strom durch das Produkt. Dabei übernimmt das Lebensmittel selbst die Funktion eines Heizwiderstandes. Die Ohm'sche Erhitzung hat im Vergleich zur klassischen Erhitzung den Vorteil, dass der elektrische Strom das Produkt praktisch ohne Zeitverzug erhitzt, sobald eine Spannung anliegt. Insbesondere kann grundsätzlich sofort auch eine Erhitzung im Inneren des Produkts eintreten.

Problematisch ist allerdings, dass bei flüssigen Lebensmitteln mit teilweise festen Stücken zunächst nur die Flüssigkeit erhitzt wird, denn Frucht-, Gemüse- oder Fleischstücke haben einen wesentlich höheren elektrischen Widerstand als die Flüssigkeit. Deshalb fließt der Strom nach dem Gesetz des geringsten Widerstands überwiegend nur durch die flüssigen Anteile des Produkts, die dann die Stücke entsprechend der thermischen Leitfähigkeit erst nach und nach erwärmen.

Aus dem Stand der Technik mit klassischer Erhitzung ist bekannt, dass ein Brät in Kunstdärme gefüllt wird und in einer Vorrichtung - z. B. einem Kochschrank, einem Wasserbad o. ä. - in Abhängigkeit vom Kaliber so lange erwärmt wird, bis die gewünschte Kerntemperatur erreicht ist. Diese Temperierung kann mehrere Stunden dauern.

Das Erwärmen im Darm hat zur Folge, dass sich bei einer hängenden Erwärmung, durch das Gewicht des Darminhalts, eine stärkere Ausdehnung im unteren Bereich des Darmes einstellt. Neben der ungleichmäßigen Ausdehnung ist zu beobachten, dass die Darmenden spitz bzw. rund zu laufen und dadurch beim späteren Aufschneiden ungleichmäßige Scheiben entstehen. Die langen Produktionsprozesse bedingen entsprechend große Produktionsflächen, die durch die langen Prozesszeiten durch den erforderlichen schonenden Erhitzungsvorgang tatsächlich belegt werden. Ein weiteres Beispiel einer klassischen Erhitzung ist zum Beispiel bekannt von https://www.youtube.com/watch?v=HH4r-LicNvE.

Gegenüber diesem Stand der Technik ist es Aufgabe der Erfindung, ein Verfahren und eine Vorrichtung zur Herstellung eines Lebensmittels anzugeben, bei dem eines oder mehrere der genannten Probleme nicht auftreten.
Insbesondere soll die Produktion von geformten Lebensmitteln ermöglicht werden, die durch Erwärmung und anschließendes Herabkühlen ihre Formstabilität erhalten. Eine derartige Formstabilität ist z. B. erforderlich, um eine Wurst für eine Aufschnittpackung in gleichmäßige Scheiben zu schneiden. Weiterhin soll aufgrund reduzierter Flüssigkeits- und Fleischeiweißverluste die Produktausbeute erhöht werden. Erfindungsgemäß wird diese Aufgabe gelöst durch ein Verfahren nach Anspruch 1, wobei die Unteransprüche mindestens zweckmäßige Weiterbildungen darstellen.
Demgemäß ist vorgesehen, dass das Behandlungsverfahren die Schritte aufweist:
- Befüllen einer formstabilen oder durch weitere Mittel formstabilisierten Hülle aus nicht-leitendem Material mit einem Füllmaterial, insbesondere mit Brät oder einem ähnlichen Lebensmittel-Rohstoff,
- Verschließen von Öffnungen der Hülle mit leitenden Flächen, insbesondere mit Platten oder Stopfen, und
- Zuführen eines elektrischen Stroms über die leitenden Flächen und Leiten des Stroms durch das Füllmaterial unter Relativbewegung zwischen Füllmaterial und den leitenden Fläche zur Gleichmäßigen Ohm'schen Erwärmung. Weiterhin ist erfindungsgemäß vorgesehen, dass eine Vorrichtung ausgebildet ist mit
- einer formstabilen Hülle aus nicht-leitendem Material, wobei die Hülle zumindest zwei gegenüberliegende Öffnungen aufweist,
- leitenden Flächen, die die Öffnungen verschließen, insbesondere Platten und/oder Stopfen, und
- einer Stromquelle zur Erzeugung eines Stroms, der über die leitenden Flächen durch ein in der Hülle gelagertes Füllmaterial fließt.

In einer erfindungsgemäßen Ausgestaltung sieht das Verfahren vor, den bekannten Ohm'schen Erhitzungsvorgang für Brät o. ä. Rohstoffe in einer geschlossenen beliebigen Form vorzunehmen, deren Oberflächen aus nicht leitenden Materialien bestehen und die an gegenüberliegenden Öffnungen durch leitende Flächen, Platten, Kolben bzw. Stopfen verschlossen werden. An die leitenden Verschlüsse, die in Form von flächigen Elektroden ausgebildet sind, kann Strom angekoppelt werden. Das Funktionsprinzip dieses elektrothermischen Verfahrens beruht auf der direkten Durchleitung von Strom durch das Füllmaterial. Dabei übernimmt das Lebensmittel selbst die Funktion eines Heizwiderstandes.

Die Ohm'sche Erhitzung hat im Vergleich zur klassischen Erhitzung den Vorteil, dass der elektrische Strom die Produkte praktisch ohne Zeitverzug erhitzt, sobald eine Spannung anliegt. Zudem ist anzumerken, dass ein durch die Ohm'sche Erhitzung sanft behandeltes Produkt deutlich geringere Koch(-saft)-verluste aufweist als konventionell erwärmte Produkte. Die Ohm'sche Erwärmung stellt sich als eine gleichzeitige Erwärmung des gesamten Rohmaterials dar ohne dass, wie bei einer üblichen thermischen Erhitzung, bedingt durch eine Einwirkung von Wärme von außen nach innen, äußere Produktschichten einer stärkeren Trocknung unterliegen. Die Folge ist neben einem geringeren Verlust bei durch ohmsche Erwärmung vorbehandelter Rohprodukte ein größeres Volumen von derart vorbehandelten Einlagen, was sich z. B. bei Sülzen durch ein optisch besseres Anschnittbild aufgrund des Verhältnisses zwischen Fleischeinlage zu Gelatine einstellt. Überraschend hat sich gezeigt, dass mittels der ohmschen Erwärmung vorbehandeltes Frischfleisch, bei einem sich anschließenden Brat- oder auch Kochvorgang, deutlich geringer austrocknet und demzufolge u. a. wegen des größeren Volumens einen höheren Zartheitsgrad aufweist. Die Temperatur der Vorerwärmung des Frischfleisches sollte oberhalb von 42 C, dem Beginn der Denaturierung von Fleischeiweiß, liegen.

Bei einer Vorbehandlung von Rohmaterial für die Produktion von z. B. Leberwurst mittels Ohm'scher Erhitzung hat sich gezeigt, dass entsprechend hergestellte Produkte neben einer höheren Ausbeute keine negativen Abweichungen zu konventionell produzierten Kochwürsten aufweisen. Ein Fett- bzw. Geleeabsatz ist nicht feststellbar. Dies lässt darauf schließen, dass das im Rohmaterial vorhandene Fleischeiweiß vollständig genutzt wird. Bei einem konventionellen Erhitzen hingegen geht Eiweiß mit dem Brühkesselwasser verloren oder es findet eine derartige Trocknung statt, dass das Eiweiß für die Bildung eines Eiweißnetzes nicht mehr zur Verfügung steht. Es kann also die Ohm'sche Erhitzung eine Vorbehandlung im Kochkutter, Kochwolf oder Brühkessel ersetzen. Weiterhin ist es möglich, auf den ansonsten erforderlichen Zusatz von Emulgatoren oder sonstigen Hilfs- oder Zusatzstoffen zu verzichten.

Bei der Produktion der vorgenannten Kochwurstprodukte wird das bereits vorgegarte Material vermischt und zerkleinert. Es ist aber auch möglich, nicht vorgegartes Rohmaterial (roh) entsprechend der Rezeptur zu mischen und zu zerkleinern. Die fertige Mischung kann dann mittels der Ohm'schen Erhitzung auf die gewünschte Temperatur gebracht werden. Eine derartige Behandlungsmethode garantiert fett- und geleeabsatzfreie Fertigprodukte mit der gewünschten Konsistenz bei gleichzeitig hoher Ausbeute.

Zur Erwärmung von unverpackten Rohmaterialien können als "formstabile Hüllen" auch Mittel angesehen werden, die z. B. wie ein Kochkessel geformt sind. Diese Mittel bestehen auch aus nicht leitendem Material oder leitenden Material, haben aber jeweils als Boden-, Seitenbegrenzung oder Deckel gegenüberliegend eine oder auch mehrere ansteuerbare Kontaktflächen über die die Bestromung erfolgen kann. Im Gegensatz zu einem Kochkessel ist darauf zu achten, dass der gesamte Aufnahmeraum möglichst lufteinschlussfrei befüllt und zusätzlich gesichert ist, so dass das Behandlungsmaterial innigen - evtl. durch Druck - Kontakt mit den stromführenden Flächen erhält.
Es ist ausgestaltend möglich, dass in einer Kesselform mittig eine Elektrode eingesetzt ist und die gesamte äußere Hülle als Gegenkontakt fungiert.
Aus dem Vorgenannten ist abzuleiten, dass die Kontakte oder Kontaktflächen die unterschiedlichsten Geometrien aufweisen können - gerade Flächen, gewölbte Flächen, Rundstäbe, Kugeln etc.

Zur gleichmäßigen Erwärmung des Behandlungsgutes ist es notwendig, dass der Behandlungsstrom gezwungen wird, möglichst gleichmäßig alle Bestandteile des Behandlungsgutes, das sich als elektrischer Widerstand darstellt, zu durchfließen.

Wenn beispielsweise in einem Behandlungsbehälter ein mittig positionierter Kontakt in Form einer Kugel eine erste Kontaktfläche darstellt, ist es von Vorteil, eine Hülle aus leitendem Material als zweiten Kontakt oder Kontaktfläche zu verwenden, wobei die Hülle ebenfalls eine Kugel oder Kugelsegmentform aufweist und die Kugel der ersten Kontaktfläche umschließt.

Es liegt im Verständnis des Fachmannes, dass eine entsprechende Entkoppelung zwischen den Kontaktflächen durch eine ausreichende Isolierung vorhanden ist.

Der zuvor beschriebene mittige Kontakt kann durch eigene Bewegung ein Vermischen des Behandlungsgutes hervorrufen, aber auch durch Veränderung der eigenen Position in Bereiche des Behandlungsgutes gelangen, die ansonsten in keiner optimalen Position zum Kontakt stehen, z. B. bei einem eckigen Metallbehälter als großflächiger Kontakt und Gegenkontakt in Form einer Kugel. Diese Behandlungsmethode für Rohstoffe, die in der Regel weiter verarbeitet werden, kann in einem offenen Behälter erfolgen, da das Behandlungsgut laufend bewegt wird und evtl. Lufteinschlüsse nur sehr kurzfristig den elektrischen Stromfluss behindern.

Aus Obigem gilt, dass in Abhängigkeit von der Form des Behandlungsbehälters und/oder der Positionierung der Kontaktflächen in diesem eine jeweils optimale Gestalt und Positionierung der Gegenkontakte zu wählen ist.

Findet ein Behälter mit einer metallischen Außenhülle zur Aufnahme des Behandlungsgutes Verwendung, kann die metallische Außenhülle gleichzeitig als Kontaktfläche fungieren. In einem diesbezüglich nicht leitenden Boden wird ein mittiger Stab im Behälter positioniert, der die Gegenkontaktfläche bildet. Ein solcher Behälter kann nicht nur stationär ausgebildet und eingesetzt werden, sondern auch als mobile Transport-, Beschickungs-, Lager- oder ähnliche Einheit ausgeführt werden.

Die Kontaktflächen können zusätzlich Zerkleinerungs- und/oder Mischfunktionen ausführen, z. B. die Gestalt von Messern besitzen. Die jeweiligen Funktionen wie Bestromung, Mischen und/oder Zerkleinern können in entsprechender zeitlicher Abfolge aber auch zeitgleich vorgenommen werden.

Nach der ohmschen Erhitzung des Füllmaterials können die leitenden Flächen (Platten und/oder Stopfen oder Kolben) als Verschluss in den Hüllen verbleiben, aber auch entfernt und Kappen aufgebracht werden, die die Hülle verschließen.

In einer Ausgestaltung der Erfindung ist vorgesehen, dass die formstabile Hülle gleichzeitig eine kontaminationsfreie Transportverpackung für das fertige Produkt darstellt, wobei die Hülle vorzugsweise derart röhrenförmig ausgestaltet ist, dass der Hüllenquerschnitt die Produktgestalt definiert. Zur Verbesserung der Gleitfähigkeit des Behandlungsgutes, kann dieses von einer Folie umhüllt, in die formstabile Hülle eingebracht werden. Durch entsprechende Ausgestaltung der Hülle (offene Enden oder mit Kontakten versehen) ist sichergestellt, dass eine Bestromung erfolgen kann.

Die Hülle selbst kann bei einer Ausführungsform der Erfindung auch als formstabiler, das Behandlungsgut aufnehmender Kasten ausgeführt sein.

Somit ist keine separate Umverpackung des Lebensmittels innerhalb des Produktionsbetriebes oder vor der Auslieferung an Verkaufsstellen erforderlich und die Gefahr eine Verunreinigung wird stark reduziert. Insbesondere kann vorgesehen sein, dass die Halbfertigwaren nach dem Erhitzungsvorgang unmittelbar noch in der formstabilen Hülle dem Aufscheidevorgang zugeführt oder zuvor abgekühlt werden. Eine Rekontamination ist durch eine derartige Vorgehensweise bis zur Entnahme für den Aufschneidevorgang ausgeschlossen.

Wenn z. B. Kasseler mit Knochen einer Ohm'schen Erhitzung unterliegen soll, kann sich der Einsatz der vorerwähnten formstabilen Hülle als problematisch herausstellen. Alternativ oder ergänzend kann bei Behandlungsgut mit Knochen die Anwendung flexibler Hüllen erfolgen oder eine Kombination flexible / formstabile Hülle zur Anwendung kommen. Maßgeblich ist, dass das Gut vollständig umschlossen wird und der Stromfluss durch das gesamte Gut erfolgt. Selbstverständlich kann die kombinierte flexible / formstabile Hülle auch bei Behandlungsgut ohne Knochen genutzt werden.

In einer weiteren Ausgestaltung der Erfindung ist vorgesehen, dass die Hülle röhrenförmig ausgestaltet ist und die leitenden Flächen ebene Flächen sind, die Grund- und/oder Deckfläche der Röhre bilden.

Bei röhrenförmiger, d.h. zylinderförmiger Ausgestaltung kann der Querschnitt z. B. kreisrund, oval, eckig, insbesondere viereckig, oder herzförmig ausgestaltet sein. Durch die Formstabilität der Hülle sind hierbei verschiedenste Ausgestaltungen des Querschnitts denkbar.
Bei dieser Ausgestaltung fallen für aus dem Füllmaterial gebildete Aufschnittprodukte immer gleichmäßige Scheiben bis zu den als Endstücken ausgebildeten Flächen an.

Eine röhrenförmige oder vergleichbare längliche Ausgestaltung der Hülle ermöglicht eine besonders einfache Herstellung des Lebensmittels. So können für die Erhitzung die leitenden Flächen an die Öffnungen der Hülle gehalten werden und somit ein elektrischer Kontakt zum Füllmaterial hergestellt werden. Nach der ohmschen Erhitzung können die leitenden Flächen dann als Verschluss in den Hüllen verbleiben oder auch entfernt werden, und die Öffnungen der Hülle durch Kappen verschlossen werden. Nach der Auslieferung des Produkts zum Kunden (z. B. Verbrauchermärkte) können eine oder beide Öffnungen wieder geöffnet werden, z. B. durch Abnehmen der Stopfen bzw. Kappen, und das Fertigprodukt herausgepresst und geschnitten werden. Somit ist eine besonders effiziente und hygienische Produktion möglich.

Die nach Entfernen der leitenden Flächen aufgebrachten Kappen können über eine Siegelnaht mit der Hülle verbunden werden. Somit ist für den Kunden erkennbar, dass das Lebensmittel noch nicht geöffnet wurde.

Die Kappen können auch nach innen gewölbt sein und von innen an der Hülle befestigt werden.

Das Entfernen der leitenden Flächen und das Anbringen der Kappen können unter Vakuum-Atmosphäre erfolgen. Somit kann eine Kontamination des Produkts verhindert werden.

Sollten z. B. engkalibrigere Produkte wie Würstchen mit darmähnlichen Rundungen versehen werden, ist auch das bis hin zu den üblichen zusätzlichen Längsrillen in den Endrundungen, die bei einer Darmabfüllung entstehen, möglich.

Derart produzierte Würstchen oder Würste (Fleischwurst o.ä.) können im noch erwärmten Zustand den starren Hüllen entnommen, in Endverbraucherpackungen umverpackt werden und bedürfen anschließend daher nur einer sehr kurzen Oberflächenerwärmung in der Endverpackung, damit eventuelle Rekontaminationen während der Entnahme aus der starren Hülle und dem Verpacken in Vakuumverpackungen, Lakebeuteln oder Konserven mit evtl. vorerwärmter Salzlake, unschädlich gemacht werden.

In einer weiteren Ausgestaltung der Erfindung ist vorgesehen, dass das Befüllen der formstabilen Hülle gegen einen zu verdrängenden Stopfen erfolgt.

Das Befüllen der Formen sollte zur Vermeidung von Lufteinschlüssen gegen einen zu verdrängen Stopfen erfolgen.

In einer weiteren Ausgestaltung der Erfindung ist vorgesehen, dass nach dem Befüllen der verwendete Stopfen in der Form verbleibt oder eine Abschlusskappe aufgebracht und druckfest befestigt wird.

Wie oben bereits ausgeführt, kann die Abschlusskappe unter Vakuum-Atmosphäre aufgebracht werden und/oder über eine Siegelnaht mit der formstabilen Hülle versiegelt werden.

In einer Ausgestaltung der Erfindung ist vorgesehen, dass die ohmsche Erhitzung kontinuierlich aber auch in Intervallen erfolgen kann, damit eine Temperaturangleichung, d. h. ein Temperaturausgleichsvorgang im Behandlungsgut schon während des Erhitzungsvorgangs erfolgen kann. Zusätzlich kann das erwärmte Füllmaterial innerhalb oder außerhalb der stabilen Form zur Angleichung der Temperatur für eine bestimmte Zeit, insbesondere mindestens 2 Minuten, vorzugsweise mindestens 10 Minuten, mit einer vordefinierten Temperatur, insbesondere der gewünschten Kerntemperatur des Fertigprodukts, gelagert wird.

In flüssigen Lebensmitteln mit Stücken wird zunächst nur die Flüssigkeit erhitzt, denn Frucht-, Gemüse- oder Fleischstücke haben einen wesentlich höheren elektrischen Widerstand als die Flüssigkeit. Deshalb fließt der Strom nach dem Gesetz des geringsten Widerstands vorwiegend durch die flüssigen Anteile des Produkts, die dann die Stücke entsprechend der thermischen Leitfähigkeit erwärmen. Wegen dieser Erscheinung ist es erforderlich, die erwärmten Produkte zur Angleichung der Temperatur für eine gewisse Zeit in einer Umgebung aufzubewahren, die idealerweise der gewünschten Kerntemperatur des Halbfertigprodukts entspricht.

In einer weiteren Ausgestaltung der Erfindung ist vorgesehen, dass das Füllmaterial vor, während und/oder nach der Ohm'schen Erhitzung durch Druck, insbesondere durch von außen aufgewendeten Druck, verdichtet wird.

Somit kann nach dem Abfüllvorgang der Abschlusspfropfen eingebracht werden und das Füllmaterial vor und während der Erwärmung mittels der Ohm'schen Erhitzung zur Sicherstellung einer festen Konsistenz verdichtet werden. Hiermit lässt sich eine besonders hohe Formstabilität und einheitliche Konsistenz des fertigen Produkts erzielen. Eine weitere Möglichkeit besteht darin, dass der Füllvorgang durch einen Abschlusspfropfen, welcher eine Öffnung besitzt hindurch erfolgt.

In einer weiteren Ausgestaltung der Erfindung ist vorgesehen, dass die Hülle vor, während und/oder nach der ohmschen Erhitzung rotiert wird.

Durch die Rotation, die vorzugsweise mit einer geringen Rotationsfrequenz durchgeführt wird, z. B. weniger als 5 Umdrehungen pro Minute, kann sich Flüssigkeit innerhalb des Füllmaterials gleichmäßiger verteilen. Insbesondere werden Flüssigkeitsablagerungen auf der Unterseite, die dann auch zu einer einseitigen Erwärmung auf der Unterseite führen würden, vermieden.

In einer weiteren Ausgestaltung der Erfindung ist vorgesehen, dass die Hülle einen mit mehreren Bohrungen versehenen Kunststoffblock aufweist, bzw. aus einem solchen besteht.

Eine derartige Hülle ist besonders einfach herzustellen und ermöglicht eine besonders stabile Lagerung des Füllmaterials.
Der Kunststoffblock kann dabei die Verpackung des Fertigprodukts darstellen. Somit lassen sich mehrere Lebensmittel, z. B. verschiedene Würste, in einer Verpackung unterbringen. Zum Beispiel können Würste verschiedener Geschmacksrichtungen in einer Verpackung untergebracht werden. Diese können durch die röhrenförmigen Bohrungen einzeln ausgepresst werden. Somit wird eine einfache und hygienische Lagerung von verschiedenen Lebensmitteln ermöglicht.

In einer Ausgestaltung der Erfindung kann die Hülle als wiederverwendbare Verpackung ausgestaltet sein. Nach Verbrauch des Lebensmittels kann die Verpackung also wieder mit Füllmaterial befüllt werden und dieses erfindungsgemäß erhitzt werden.

In einer weiteren Ausgestaltung der Erfindung ist vorgesehen, dass mehrere Hüllen im Verbund befüllt werden und diese später, insbesondere nach der ohmschen Erhitzung, vereinzelt werden.

Zum Beispiel können zwei Hüllen in Form einer "8" miteinander verbunden sein, gemeinsam befüllt und beheizt werden und dann vereinzelt werden.

Zum Beispiel können an dem Kunststoffblock Solltrennstellen vorgesehen sein und der Kunststoffblock lässt sich in eine Vielzahl von formstabilen Hüllen zerlegen.

Somit lässt sich eine besonders effiziente Massenherstellung des Lebensmittels realisieren.

Bei einer Ausgestaltung der Erfindung besteht die Möglichkeit, die Strombeaufschlagung des Behandlungsguts in Intervallen durchzuführen. Demnach folgt einem Bestromungsintervall ein Ruheintervall zur Angleichung der Temperatur im Produkt. Die jeweilige Zeitdauer der Intervalle ist wählbar anhand der Produkteigenschaften, beispielsweise der Wärmeleitfähigkeit.

Die formstabile Hülle kann nach dem Befüllen und der ohmschen Behandlung des in der Hülle bzw. Kartusche befindlichen Produkts unmittelbar nach der Behandlung, aber auch zeitverzögert einer Aufschnittmaschine zugeführt werden. Nach Entfernung der vorhandenen Stopfen ist das Füllgut aus den Kartuschen herausdrückbar und kann in entweder warmem oder abgekühltem Zustand in Scheiben vereinzelt werden. Durch die stabilisierende Hülle ist gewährleistet, dass trotz einer gegebenenfalls noch nicht schnittfesten Konsistenz des Gutes eine gleichmäßige Scheibenkontur erzielt wird, da immer nur ein kleiner Teil des Produkts für die Schnittführung herausgedrückt wird. Die erhaltenen Aufschnittscheiben können warm verpackt werden und sind aus diesem Grund gegenüber einer Kontamination unempfindlich. Eine Dampfbewegung findet hier vom warmen Aufschnitt hin zur kälteren Umgebung statt.

Das vorstehend beschriebene Verfahren ermöglicht eine nahezu vollautomatische Fertigung von Aufschnitten nebst Verpackung, und zwar vom Füllvorgang der Kartuschen bis hin zur Kommissionierung der Ware. Erforderliche Zwischenschritte wie z. B. Kühlung der Verpackung und Preisauszeichnung sind in den Prozess ohne weiteres integrierbar. Erfindungsgemäß wird während der Bestromung unter Rückgriff auf einen Wechselstrom eine Relativbewegung zwischen Füllmaterial und den leitenden Flächen, die als Bestromungselektroden dienen, erzeugt, so dass die Ohm'sche Erwärmung unabhängig von der Konsistenz des Füllmaterials gleichmäßig ohne örtliche Überhitzungen oder nicht ausreichend erwärmter Bereiche stattfindet.
Zusätzlich zu der zuvor genannten Bestromungsart, kann die Struktur grobstückiger Teile, wie z. B. Schinkenstücke vor der Behandlung durch eine Vielzahl kleiner Messer (Steaker) aufgelockert werden, sodass Kollagen- bzw. Fettschichten nur eine sehr geringe Ableitung des Stromflusses verursachen.
Zur weiteren Verbesserung des erfindungsgemäßen Lösungsansatzes kann im Anschluss, während, aber auch vor der Ohm'schen Erwärmung das Füllmaterial einer hochfrequenten Erwärmung ausgesetzt werden, so dass ein schnelleres Erreichen und Halten der jeweiligen Kerntemperatur im Füllmaterial gewährleistet wird.
Bei Produkten, die von starken Fettschichten durchzogen sind, z. B. Bauchfleisch, wird der Magerfleischanteil im gewünschten Sinne durch die Ohm'sche Erhitzung erwärmt mit den sich dadurch ergebenden Vorteilen, wie z. B. eine verbesserte Wasserbindung und Ausbeute. Wird in diesem Falle noch ergänzend eine hochfrequente Behandlung durchgeführt, können auch die ansonsten womöglich nicht ausreichend erwärmten Fettschichten auf die gewünschte Temperatur gebracht werden, die in der Regel niedriger gehalten wird, um ein Zerplatzen mit der Folge einer Schmalzigkeit der Fettzellen zu verhindern.

Es hat sich gezeigt, dass die reine Hochfrequenz-Erwärmung ihre Grenzen bei Durchmessern des Füllmaterials im Bereich von 10 cm findet. Wenn diesbezüglich die Hochfrequenz-Erwärmung mit der Ohm'schen Erwärmung oder Ohm'schen Erhitzung kombiniert wird, kann durch das Ausbilden gezielter Strompfade, z. B. insbesondere innerhalb einer Kernlängsachse im Füllmaterial, die Erwärmung schneller erreicht und die gewünschte Kerntemperatur erhalten werden, so dass insgesamt die Behandlungszeit verkürzt und der Energieeinsatz effektiviert ist. Die Hochfrequenzenergie wird aus einem Generator bereitgestellt, der hochfrequente Schwingungen im Bereich von im Wesentlichen 5 bis 50 MHz bereitstellt. Diese Hochfrequenzenergie wird auf das Füllmaterial eingekoppelt, das sich bevorzugt innerhalb eines Faradayschen Käfigs befindet. Hierbei ist sowohl eine diskontinuierliche als auch eine kontinuierliche, d.h. Durchlaufbehandlung denkbar.

Durch eine zusätzliche Amplituden- oder Frequenzmodulation oder auch beim Überlagern höherfrequenter Schwingungen bezogen auf den Ausgangsbereich von 5 bis 50 MHz können unterschiedliche Bestandteile im Füllmaterial, z. B. Magerfleisch, Fett, Muskelfasern und Ähnliches definiert erwärmt werden. Damit besteht die Möglichkeit, Nachteile des Erwärmungsvorgangs aufgrund unterschiedlicher Leitfähigkeitseigenschaften der entsprechenden Bestandteile auszugleichen.

Im Fall der zusätzlichen und ergänzenden Erwärmung auf der Basis des Einwirkens von hochfrequenter Energie wird das Füllmaterial als Dielektrikum innerhalb eines Schwingkreiskondensators eingesetzt. Über eine Abstimmung des Schwingkreises kann hinsichtlich verschiedener und sich gegebenenfalls ändernder Eigenschaften des Füllmaterials reagiert werden, so dass sich die gewünschte Prozesssicherheit einstellt.

Bei einer erfindungsgemäßen Weiterbildung der Erfindung besteht die Möglichkeit einer kontinuierlichen Behandlung durch Ohm'sche Erhitzung, insbesondere bei der Herstellung von Wurstwaren. Diesbezüglich kann eine kontinuierliche Fertigung gesichert werden, indem nach dem Molch-Prinzip dem in der formstabilen Hülle befindlichen Füllmaterial ein Elektrodenelement folgt und sich wiederum eine vorgegebene Menge Füllmaterial anschließt usw.
Eine Bestromung ist dann hinsichtlich der sich ergebenden Segmente über die molchartig eingebetteten Elektroden möglich, die bei einer kontinuierlichen Bewegung durch die formstabile Hülle mit entsprechenden Kontakten, die entsprechend der erforderlichen Behandlungszeit in unterschiedlichen Abständen und Längen (einzuschraubende Elemente) vorgesehen sind, in elektrische Verbindung gelangen, um über einen so definierten Zeitraum in Abhängigkeit von der Füllgeschwindigkeit, während der Bewegung der Füllmaterialien nebst Molch-Elektrode in der Hülle einen Strom zu führen.

Das Hindurchbewegen der quasi kontinuierlichen Kette aus Füllmaterial, Molch usw. kann mit Hilfe einer Druckbeaufschlagung bzw. eines handelsüblichen Vakuum-Kontifüllers oder dergleichen Mittel realisiert werden. Zum Erhalt der typischen Wurstenden bei der Produktion von z. B. Würstchen, ist es möglich, die Kontur des "Molches" so zu gestalten, dass das Abbild eines runden Darmendes erzielt wird.

Bei einer weiterbildenden Ausgestaltung der Erfindung kann das Behandlungsgut innerhalb der Hülle durch leitende Begrenzungen, z. B. Scheiben aus leitendem Material in Abschnitte unterteilt werden. Diese leitfähigen Begrenzungen führen zum einen zu einem Homogenisieren des Stromflusses und damit zu einer Vergleichmäßigung der Ohm'schen Erwärmung. Zum anderen ergeben sich Einzelstücke des Behandlungsgutes mit einem geraden Anschnitt, was die Ausbeute erhöht. Letztendlich kann durch die leitenden Begrenzungen eine Unterteilung im Sinne einer Portionierung vorgenommen werden.

Aus Versuchen hat sich gezeigt, dass das aus der formstabilen Hülle nach Behandlung entnommene Gut in Scheiben geschnitten werden kann. In Abhängigkeit von der Konsistenz des Behandlungsgutes besteht jedoch die Gefahr, dass sich die Aufschnittscheiben verziehen. Erfindungsgemäß kann das Behandlungsgut aus der Hülle bzw. dem Formkasten so weit herausgefahren werden, bis das Behandlungsgut auf einen Anschlag trifft, der sich als üblicherweise ebene Fläche einer Haltevorrichtung darstellt. Das Gut wird auf diesem Wege von der Oberfläche der Haltevorrichtung stabilisiert und kann ohne Verformung geschnitten werden. Eine weitere diesbezügliche Formstabilisierung ist dadurch möglich, dass die Oberfläche der Haltevorrichtung Bohrungen kleinen Durchmessers aufweist oder aus einem feinmaschigen Netz besteht. Mit Hilfe eines Vakuums ist die geschnittene Scheibe an der Oberfläche fixierbar, so dass auch ein an sich labiles Produkt stabilisiert werden kann. Bei einem anzustrebenden Automatisierungsprozess kann die Haltevorrichtung gleichzeitig als Mittel zum Übergeben des an ihrer Oberfläche gehaltenen scheibenartigen Produktes, z. B. hin zu einer Endverbraucherpackung genutzt werden. Ein händisches Inkontaktkommen mit dem Produkt, insbesondere dem entsprechenden Aufschnitt wird dadurch vermieden.

Das Schneiden des Behandlungsguts in Scheiben oder entsprechend flache Stücke kann dadurch erfolgen, indem eine Drehbewegung des Gutes, sobald es aus der formstabilisierenden Hülle herausgefahren wurde, eingeleitet wird. Durch die Drehbewegung erfolgt in Verbindung mit einem zugeführten Messer eine Schnittbewegung unter Vermeidung von ansonsten auftretenden Abrieben, die sich als Produktfähnchen darstellen. Bei dem eingesetzten Messer kann es sich um ein ultraschallunterstütztes Messer handeln. Die vorstehend kurz erläuterte Technologie des Schneidens in Scheiben oder Stücke ist bevorzugt kontaminationsfrei realisierbar, da das Produkt unmittelbar nach dem Herausfahren aus der Hülle dem gewünschten Schnitt unterliegt. Eine Kontaminierung diesbezüglich wird durch Vermeidung eines händischen Kontakts ausgeschlossen.

Wird Frischfleisch mittels nichtkonventioneller, insbesondere ohmscher Erwärmung behandelt, tritt der Effekt ein, dass bei einem anschließenden Brat- oder Kochvorgang das derart vorbehandelte Frischfleisch weniger austrocknet und einen höheren Zartheitsgrad aufweist. Die Temperatur der Vorbehandlung des Frischfleisches durch die bevorzugte ohmsche Erwärmung soll hier bei oberhalb von 42 °C, dem Beginn der Denaturierung von Fleischeiweiß, liegen. Das mit der ohmschen Erwärmung im Stück behandelte Frischfleisch kann entsprechend verpackt zum Endverbraucher gelangen und wird dort einem abschließenden Aufbereitungsschritt, insbesondere einem Bratschritt zur Krustenbildung unterzogen. Hierdurch stellt sich die gewünschte Zartheit des Produktes in reproduzierbarer Weise ein und hängt nicht vom Geschick oder von der Ausrüstung bezüglich der endgültigen Zubereitung des Fleisches ab.

Neben dem vorstehend geschilderten positiven Effekt der ohmschen Erwärmung auf Frischfleisch, das im Rahmen eines üblichen Schlacht- und Zerlegevorganges gewonnen wurde, tritt als weiterer positiver Effekt im Ergebnis einer ohmschen Erwärmung vor Eintritt des Rigor mortis ein Beenden unerwünschter biochemischer Vorgänge ein. Dies ist zurückzuführen auf die stattfindende Eiweißdenaturierung bei der genannten Behandlungstemperatur von oberhalb 42 °C und einem Vermindern oder Ausschließen des unerwünschten cold- oder hotshortening.

Obwohl bei der vorstehenden Erläuterung prinzipiell auf die Behandlung von Fleisch- und Wurstwaren eingegangen wird, ist selbstverständlich auch die Behandlung von anderen Lebensmitteln, wie z. B. Käse, Tofu oder dergleichen mittels Ohm'scher Erhitzung möglich. Zum einen kann die Ohm'sche Erwärmung in Behältnissen realisiert werden, die später als Vollkonserve in den Verkehr gebracht werden. Das im Behältnis befindliche und dieses ausfüllende Produkt wird dann z. B. bei einer Dose aus nichtleitendem Material über leitfähige Deckel erwärmt und ist letztendlich kontaminationsfrei verpackt. Grundsätzlich dient die Ohm'sche Erwärmung auch der Behandlung von solchen Lebensmittel-Rohstoffen, die einer Weiterverarbeitung zugeführt werden, wie z. B. die Erwärmung von Fleisch für die Produktion von Leberwurst, Cornedbeef o.ä.. Durch eine gezielte Temperaturwahl kann das behandelte Rohmaterial, z. B. für die Produktion von Bouletten, so voreingestellt werden, dass das Erreichen einer bestimmten Zieleigenschaft, z. B. gute Saftigkeit bei lockerer Konsistenz, gewährleistet ist.

Bei einem Ausführungsbeispiel der Erfindung, nämlich der Behandlung von Rohwurstmasse, wird wie folgt vorgegangen. Üblicherweise wird Rohwurstbrät zum Erhalt eines klaren Bildes sowie zur Verhinderung eines Schmierfilms im kalten Zustand in einen Darm gefüllt. Im Anschluss werden die Rohlinge in eine Klimakammer verbracht, in der die Rohwurstmasse temperiert wird. Die Temperatur erlaubt es, dass Mikroorganismen aktiv werden und das Rohwurstbrät absäuert. Üblicherweise liegt die Temperatur während dieser Behandlungszeit in der Klimakammer im Bereich zwischen 22°C und 28°C. Sobald der pH-Wert des Rohwurstmaterials den isoelektrischen Punkt mit hoher Wasserabgabebereitschaft von ca. pH 5,3 erreicht hat, setzt die Trocknung der Rohlinge ein. Bis zum Erreichen des isoelektrischen Punktes soll jedoch die Oberfläche der Wurst nicht getrocknet werden, da ansonsten ein sogenannter Trockenrand entsteht, der letztendlich die Wasserabgabe beeinträchtigt oder verhindert.

Die in dieser Zeit in der üblicherweise eingesetzten Klimakammer herrschende hohe Luftfeuchtigkeit, gepaart mit den relativ hohen Temperaturen, unterstützt die Vermehrung und den Befall durch unerwünschte Mikroorganismen bzw. Schimmel- und Hefepilze auf der Wurstoberfläche. Fehler, die in dieser Temperaturangleichungs- oder Absäuerungsphase von ca. 1 bis 3 Tagen gemacht werden, können insgesamt über das Gelingen einer Produktionscharge entscheiden.

Rohwurstmasse, die, auch im sehr kalten Zustand, in Kartuschen gefüllt wird, kann durch Verschlüsse und durch Druck dauerhaft weiterverdichtet werden. Je dichter im Fertigprodukt die einzelnen Partikel beieinander liegen, desto farbkräftiger erscheint das Produkt. Gemäß Ausführungsbeispiel wird dann eine Ohm'sche Erwärmung auf die oben genannten Temperaturen im Bereich von 22°C bis 28°C vorgenommen. Da das Brät während der ersten 1 bis 3 Produktionstage lediglich zur Gelbildung abgesäuert werden muss, kann das Brät - gegebenenfalls auch unter Druck - in den Kartuschen verbleiben, so dass keine Beeinflussung der Halbfertigwaren von außen, z. B. durch Mikroorganismen, erfolgen kann. Zur Temperaturaufrechterhaltung können die dicht verschlossenen Kartuschen in einem temperierten Raum, aber auch im Wasserbad zwischengelagert werden. Sobald der gewünschte isoelektrische Punkt erreicht ist, können die bereits verfestigten Rohlinge den Kartuschen entnommen werden und in bekannten Klimakammern bis zur Fertigstellung getrocknet, geräuchert bzw. gereift werden.

Durch diese Produktionsabfolge gemäß Ausführungsbeispiel kann die Belegung der Klimakammern in der ersten Produktionsphase vermieden werden. Der erforderliche Energieaufwand zur Klimatisierung der Kammern entfällt. Durch die mögliche zusätzliche und hohe Druckaufbringung auf das Rohwurstbrät während der ersten Phase erfolgt eine positive Unterstützung der Konsistenzbildung des Rohwurstmaterials. Während des Füllvorgangs von kalter Rohrwurstmasse kann auf enge Fülldurchlässe (z. B. zum Befüllen eines flexiblen Darmes) verzichtet werden, wodurch ein sehr klares Rohwurstbild und eine optimale Wasserabgabebereitschaft unterstützt wird. Auch wird einer durch weiches Fett verursachten (Schlieren-) Schmierbildung entgegengewirkt.

Gemäß einem weiteren Ausführungsbeispiel kann auch die Behandlung von Darmware durch Ohm'sche Erhitzung optimiert werden. So kann ein Brätstrang in eine Schalenform, insbesondere Halbschale gefüllt werden. Durch das Aufbringen einer passgenauen Deckelschale erfolgt eine Verteilung des Bräts derart, dass es zwischen in den Schalen eingearbeiteten leitfähigen Abschnitten gleichmäßig einer Verteilung unterliegt. Durch das Annähern an die leitfähigen Begrenzungen bei Aufbringen oder Aufsetzen der Deckelschale ergibt sich die gewünschte gleichmäßige Verteilung und Verdrängung des Bräts. Nach oder mit Inkontaktkommen der Kontakthälften beginnt ein Stromfluss. Nach sehr kurzer Behandlungszeit können die derart verfestigten Rohlinge entnommen werden. Selbstverständlich kann vor dem Einbringen des Bräts in die Schalen ein Material zur Oberflächenbehandlung auf die Innenseite der Schalen aufgebracht werden, wie z. B. ein sogenanntes Rauchpulver oder ein Geschmacksstoff.

Die Schalenanordnung kann nicht nur aus mehreren nebeneinander liegenden Bahnen bestehen, sondern auch aus mehreren Gliedern bestehen, die über ein Rad im ständigen Umlauf sind. Die Vereinzelung der erhitzten Rohlinge kann während des Kontakts der Schalen oder Platten erfolgen. Durch diese gleichzeitige Behandlung ist gewährleistet, dass die Rohlinge nach der Entnahme aus den Schalen/Platten geordnet vorliegen und durch geeignete Greifer direkt in die jeweiligen Verpackungen eingebracht werden können.

Eine derartig ausgestaltete Vorrichtung kann auch zur Verfestigung von Produkten genutzt werden, die in einen leitfähigen (Natur-) Darm gefüllt sind. Durch das Zusammendrücken der Kontaktelemente erfolgt eine Trennung zwischen den Abschnitten der Halbfertigwaren, so dass nach der Behandlung mittels Strom die verfestigten Rohlinge entnehmbar sind. Während der eigentlichen Strombehandlung unterliegen die Rohlinge einem Druck, so dass gesichert ist, dass die Fertigprodukte über die gewünschte feste Konsistenz verfügen. Die jeweilige Form oder der Durchmesser der Fertigprodukte kann über die Formgebung der erwähnten Schalen bzw. Halbschalen realisiert werden. Die Einbringung des Stroms bzw. der Kontakte ist quasi beliebig. Die den Brätstrang aufnehmenden Schalen bzw. Halbschalen können aus nichtleitendem Material bestehen oder mit einer Isolierschicht versehen sein. Es ist hierdurch möglich, die formgebenden Komponenten von den Kontaktkomponenten zu trennen und jeweils separat zu optimieren.

Es bleibt im Ergebnis bisheriger Untersuchungen festzustellen, dass die Ohm'sche Erhitzung durch die zeitgleiche und sehr schnelle Erwärmung der entsprechenden Produkte an quasi jeder Stelle des Produkts gewährleistet, dass sich Mikroorganismen nicht auf eine veränderte Temperaturumgebung einstellen können, wie dies bei einer langsamen Erwärmung unausweichlich erfolgt. Dadurch ist die Belastung durch Mikroorganismen geringer im Vergleich zur konventionellen Pasteurisation oder Konservierung. Weiterhin fällt die Produktschädigung durch die Ohm'sche Hitzebehandlung aufgrund der besseren Eiweißnetzausbildung und geringeren Austrocknungsrate der zu behandelnden Produkte geringer aus als bei üblichen, konventionellen Hitzebehandlungen. Die erwärmten und zügig verpackten Produkte können durch eine nachgelagerte, an sich bekannte Hochdruckbehandlung in einem Isolierbeschickungsbehälter durch die erneute Hitze- und Hochdruckeinwirkung so sicher werden, dass im Ergebnis quasi eine Konservierung vorliegt, ohne dass die ansonsten bei einer hohen Temperatureinwirkung entstehenden negativen Geschmacksveränderungen auftreten. Damit können ausgewählte Produkte ohne Kühlung vermarktet werden, die qualitativ und geschmacklich mit konventionell gefertigten aber zu kühlenden Produkten vergleichbar sind.

Es ist also mittels der Ohm'schen Erwärmung möglich, Lebensmittel, insbesondere Fleisch und Fleischwaren, an jeder Stelle so gleichzeitig zu erwärmen, dass durch die Erhitzung die vorhandenen Eiweiße unumkehrbar einer Denaturierung unterliegen. Erzeugnisse, die zur Qualitätsverbesserung im Vorfeld nur einer geringen Ohm'sche Erwärmung um etwa 55°C unterzogen werden, wie z. B. Bratwurst, Kasseler, Braten oder Ähnliches, können vor dem späteren Verzehr auf die gewünschte Verzehrtemperatur nacherhitzt werden und weisen zu Produkten des Standes der Technik mindestens vergleichbare Verzehr-, Genuss- und Geschmackseigenschaften auf. Die derart im Vorfeld mild erhitzten Produkte haben den Vorteil, dass der gewünschte Zartheitsgrad, die gewünschte Saftigkeit, d.h. Wasserbindung, durch die vorgelagerte gleichmäßige Erhitzung höher ist als bei solchen Produkten, die aus unbehandelten Zubereitungen bestehen.

Es hat sich bei der praktischen Anwendung des erfindungsgemäßen Verfahrens gezeigt, dass eine Vergrößerung der Oberfläche des Behandlungsguts zur gleichmäßigen Bestromung von Vorteil ist. Sehnenplatten oder Sehnenstränge, Fettschichten oder Ähnliches, einen Stromfluss reduzierende Bestandteile, werden im Vorfeld geöffnet, z. B. durch Messer aufgeschlitzt. Hierdurch wird eine für die Durchdringung von Flüssigkeit an den Schnittstellen optimierte Struktur geschaffen. Bevorzugt werden Produkte, die mittels Ohm'scher Erhitzung behandelt werden, im Vorfeld angesalzen und/oder mit einer Lake gespritzt. Durch die mit den Messern geschaffenen Öffnungen kann entsprechendes Salz und/oder Flüssigkeit eindringen und eine stromoptimierende Veränderung schaffen, so dass eine gleichmäßige Erwärmung auch bei von Kollagen oder fettummantelten Schichten eintritt. Nach der Behandlung mittels Ohm'scher Erhitzung sind die geschaffenen Schnittstellen nicht sichtbar und nicht nachteilig. Mittels Ohm'scher Erhitzung behandelte Produkte sind der Produktgruppe der Erzeugnisse zuzuordnen. Damit umfasst die erfindungsgemäß zu behandelnde Produktpalette behandeltes (mariniertes, gesalzenes etc.) oder unbehandeltes Fleisch zum Braten oder Kochen und an sich bekannte Wurst- oder Fleischwaren, wie bereits erläutert.

## Patentansprüche

1. Verfahren zur Behandlung eines Lebensmittels, insbesondere Fleisch- oder Wurstwaren, mittels nichtkonventioneller Erhitzung, mit den Schritten
- Befüllen einer formstabilen oder durch zusätzliche Mittel formstabilisierten Hülle aus nicht-leitendem Material mit einem Füllmaterial, nämlich mit Brät oder einem ähnlichen Lebensmittel-Rohstoff,
- Verschließen von Öffnungen der Hülle mit leitenden Flächen, insbesondere mit Platten, Kolben oder Stopfen, und
- Zuführen eines elektrischen Wechselstroms über die leitenden Flächen und Leiten des Stroms durch das Füllmaterial unter Relativbewegung zwischen Füllmaterial und den leitenden Flächen zur gleichmäßigen Ohm'schen Erwärmung.

2. Verfahren nach Anspruch 1,
**dadurch gekennzeichnet, dass**
die formstabile Hülle gleichzeitig eine kontaminationsfreie Verpackung, insbesondere Transportverpackung für das fertige Produkt darstellt, wobei die Hülle vorzugsweise derart ausgestaltet ist, dass der Hüllenquerschnitt die Produktgestalt definiert.

3. Verfahren nach einem der vorherigen Ansprüche,
**dadurch gekennzeichnet, dass**
die Hülle röhrenförmig ausgestaltet ist und die leitenden Flächen ebene Flächen sind, die Grund- und/oder Deckfläche der Röhre bilden.

4. Verfahren nach einem der vorherigen Ansprüche,
**dadurch gekennzeichnet, dass**
das Befüllen der Hülle gegen einen zu verdrängenden Stopfen erfolgt und/oder nach dem Befüllen eine Abschlusskappe aufgebracht und druckfest befestigt wird.

5. Verfahren nach einem der vorherigen Ansprüche,
**dadurch gekennzeichnet, dass**
das nach der Ohm'schen Erhitzung das erwärmte Füllmaterial zur Angleichung der Temperatur für eine bestimmte Zeit, insbesondere ca. 2 Minuten, vorzugsweise mindestens 10 Minuten, mit einer vordefinierten Temperatur, insbesondere der gewünschten Kerntemperatur des Fertigprodukts, gelagert wird.

6. Verfahren nach einem der vorherigen Ansprüche,
**dadurch gekennzeichnet, dass**
das Füllmaterial vor, während und/oder nach der Ohm'schen Erhitzung durch Druck, insbesondere durch von außen aufgewendeten Druck, verdichtet wird.

7. Verfahren nach einem der vorherigen Ansprüche,
**dadurch gekennzeichnet, dass**
die Hülle während der Ohm'schen Erhitzung rotiert.

8. Verfahren nach einem der vorherigen Ansprüche,
**dadurch gekennzeichnet, dass**
mittels der Ohm'schen Erhitzung erwärmte Rohmaterialien anschließend im warmen oder wieder erkalteten Zustand zerkleinert, vermischt oder verfüllt werden und durch die Vorbehandlung ein Gelee- oder Fettabsatz im Fertigprodukt verhindert wird.

9. Verfahren nach einem der vorherigen Ansprüche,
**dadurch gekennzeichnet, dass**
mehrere Hüllen im Verbund befüllt werden und diese später, insbesondere nach der Ohm'schen Erhitzung, vereinzelt werden.

10. Verfahren nach einem der vorangegangenen Ansprüche,
**dadurch gekennzeichnet, dass**
im Anschluss, während oder vor der Ohm'schen Erwärmung bzw. Erhitzung das Füllmaterial einer Hochfrequenz-Erwärmung ausgesetzt wird, so dass ein schnelleres Erreichen und Halten der jeweiligen Kerntemperatur im Füllmaterial gewährleistet wird.

11. Verfahren nach Anspruch 10,
**dadurch gekennzeichnet, dass**
die Hochfrequenzenergie aus Schwingungen im Bereich von im Wesentlichen 5 bis 50 MHz bereitgestellt und auf das Füllmaterial eingekoppelt wird, wobei durch zusätzliche Amplituden- oder Frequenzmodulation gezielt unterschiedliche Bestandteile im Füllmaterial definiert erwärmbar sind.

12. Verfahren nach Anspruch 10 oder 11,
**dadurch gekennzeichnet, dass**
das Füllmaterial als Dielektrikum innerhalb eines Schwingkreiskondensators eingesetzt und erwärmt wird.

13. Verfahren nach einem der vorangegangenen Ansprüche,
**dadurch gekennzeichnet, dass**
die formstabile Hülle eine Beschichtung, insbesondere eine Innenbeschichtung, aufweist.

14. Verfahren nach Anspruch 4,
**dadurch gekennzeichnet, dass**
das Befüllen der Hülle gegen einen zu verdrängenden stromleitenden Stopfen erfolgt oder, dass nach dem Molch-Prinzip nach dem Befüllen ein stromleitender Stopfen oder eine stromleitende Trennplatte eingebracht wird, der von einem weiteren Befüllabschnitt mit weiteren stromleitenden Stopfen oder einer stromleitenden Trennplatte ergänzt wird.

15. Verfahren nach einem der vorangegangenen Ansprüche,
**dadurch gekennzeichnet, dass**
das Füllmaterial aus der Hülle herausbewegt und gegen einen stabilisierenden Anschlag gedrückt sowie in Scheiben vereinzelt wird.

16. Verfahren nach einem der Ansprüche 1 bis 5,
**dadurch gekennzeichnet, dass**
das Behandlungsgut Fleischware derart einer gleichmäßigen ohmschen Erwärmung unterliegt, dass im Frischfleisch Temperaturen von oberhalb 42 °C über einen vorgegebenen Zeitraum eingehalten werden, um Qualitätsminderungen aufgrund biochemischer Vorgänge zu verhindern und den Zartheitsgrad des Behandlungsgutes auch bei anschließenden Brat- oder Kochvorgängen zu erhalten.

## Claims

1. A method for treating food, in particular meat and sausage products, by means of non-conventional heating, using the steps of
- filling a casing of a non-conducting material, which casing is dimensionally stable or dimensionally stabilized by additional means, with a filling material, namely sausage meat or a similar food raw material,
- closing openings of the casing by means of conducting surfaces, in particular plates, plungers or plugs, and
- feeding electric alternating current via the conducting surfaces, and conducting the current through the filling material under a relative movement between the filling material and the conducting surfaces for uniform ohmic heating.

2. The method according to claim 1,
**characterized in that**
the dimensionally stable casing represents at the same time a contamination-free package, in particular a transport package for the ready product, wherein the casing is preferentially configured such that the casing's cross-section defines the product shape.

3. The method according to any one of the preceding claims,
**characterized in that**
the casing is of a tubular shape, and the conducting surfaces are flat surfaces forming the tube's bottom surface and/or shell surface.

4. The method according to any one of the preceding claims,
**characterized in that**
the filling of the casing is performed against a plug to be displaced and/or an end cap is applied and attached in a pressure-tight manner after filling.

5. The method according to any one of the preceding claims,
**characterized in that**
after the ohmic heating, the heated filling material is stored for a determined time, in particular about 2 minutes, preferably at least 10 minutes, at a predefined temperature, in particular the ready product's desired core temperature, for equalizing the temperature.

6. The method according to any one of the preceding claims,
**characterized in that**
the filling material is compacted by pressure, in particular by pressure applied from outside, prior to, during and/or after the ohmic heating.

7. The method according to any one of the preceding claims,
**characterized in that**
the casing rotates during the ohmic heating.

8. The method according to any one of the preceding claims,
**characterized in that**
the raw materials heated by the ohmic heating are subsequently chopped, mixed or backfilled in the warm or cooled down state, and a gel or fat deposition in the ready product is prevented by the pretreatment.

9. The method according to any one of the preceding claims,
**characterized in that**
several casings are filled in combination and separated later, in particular after the ohmic heating.

10. The method according to any one of the preceding claims,
**characterized in that**
subsequent to, during or prior to the ohmic heating or heating, the filling material is subjected to a high-frequency heating so that it is guaranteed that the respective core temperature is reached and held more quickly in the filling material.

11. The method according to claim 10,
**characterized in that**
the high-frequency energy is provided from vibrations in the range of substantially 5 to 50 MHz and coupled into the filling material, wherein different components may be heated in the filling material in a defined manner by an additional amplitude or frequency modulation.

12. The method according to claim 10 or 11,
**characterized in that**
the filling material is used and heated as a dielectric within a resonant circuit capacitor.

13. The method according to any one of the preceding claims,
**characterized in that**
the dimensionally stable casing comprises a coating, in particular an inner coating.

14. The method according to claim 4,
**characterized in that**
the filling of the casing is performed against a current-conducting plug to be displaced, or that, according to the Molch principle, a current-conducting plug or a current-conducting separator plate is introduced after the filling which is supplemented by a further filling section with further current-conducting plugs or a current-conducting separator plate.

15. The method according to any one of the preceding claims,
**characterized in that**
the filling material is moved out from the casing and pressed against a stabilizing stop and separated into slices.

16. The method according to any one of claims 1 to 5,
**characterized in that**
the treatment material meat product is exposed to a uniform ohmic heating in such a manner that temperatures of above 42°C are satisfied in the fresh meat for a predefined period of time so as to prevent quality degradations due to biochemical processes and to preserve the treatment material's degree of tenderness even at subsequent roasting and cooking processes.

## Revendications

1. Procédé pour le traitement d'un produit alimentaire, en particulier d'un produit à base de viande ou de charcuterie, au moyen d'un chauffage non traditionnel, comprenant les étapes consistant à :
- remplir une enveloppe à forme stable ou dont la forme est stabilisée par des moyens supplémentaires, en matériau non conducteur, avec un matériau de remplissage, à savoir de la chair à saucisse ou un produit alimentaire brut similaire,
- fermer des ouvertures de l'enveloppe avec des surfaces conductrices, en particulier avec des plaques, des pistons ou des bouchons, et
- appliquer un courant électrique alternatif via les surfaces conductrices et faire passer le courant à travers le matériau de remplissage avec un mouvement relatif entre le matériau de remplissage et les surfaces conductrices pour obtenir un réchauffement résistif régulier.

2. Procédé selon la revendication 1,
**caractérisé en ce que** l'enveloppe à forme stable représente simultanément un emballage dépourvu de contamination, en particulier un emballage de transport pour le produit fini, l'enveloppe étant de préférence conçue de telle façon que la section de l'enveloppe définit la conformation du produit.

3. Procédé selon l'une des revendications précédentes,
**caractérisé en ce que** l'enveloppe est conçue sous forme tubulaire et les surfaces conductrices sont des surfaces planes qui forment la surface de base et/ou la surface de couverture des tubes.

4. Procédé selon l'une des revendications précédentes,
**caractérisé en ce que** le remplissage de l'enveloppe a lieu à l'encontre d'un bouchon à refouler et/ou **en ce qu'**après remplissage on applique un capuchon de fermeture et on le fixe de manière à résister à la pression.

5. Procédé selon l'une des revendications précédentes,
**caractérisé en ce qu'**après le réchauffement résistif le matériau de remplissage réchauffé est entreposé, pour l'égalisation de température, pendant un temps prédéterminé, en particulier environ deux minutes, de préférence au moins 10 minutes, avec une température prédéfinie, en particulier la température à coeur souhaitée du produit fini.

6. Procédé selon l'une des revendications précédentes,
**caractérisé en ce que** le matériau de remplissage et compacté, avant et/ou après le réchauffement résistif, au moyen d'une pression, en particulier d'une pression appliquée de l'extérieur.

7. Procédé selon l'une des revendications précédentes,
**caractérisé en ce que** l'enveloppe est en rotation pendant le réchauffement résistif.

8. Procédé selon l'une des revendications précédentes,
**caractérisé en ce que** les matières brutes réchauffées au moyen du réchauffement de résistif, sont ensuite hachées, mélangées ou remplies, à l'état chaud ou à l'état à nouveau refroidi, et **en ce que** grâce au traitement préliminaire on empêche une séparation de la gelée ou des matières grasses dans le produit fini.

9. Procédé selon l'une des revendications précédentes,
**caractérisé en ce que** l'on remplit plusieurs enveloppes de manière groupée et **en ce que** celles-ci sont individualisées plus tard, en particulier après le réchauffement résistif.

10. Procédé selon l'une des revendications précédentes,
**caractérisé en ce qu'**ensuite, avant ou après le réchauffement résistif ou le chauffage, le matériau de remplissage est soumis à un chauffage à haute fréquence, de sorte que l'on garantit d'atteindre rapidement et de maintenir la température à coeur souhaitée dans le matériau de remplissage.

11. Procédé selon la revendication 10,
**caractérisé en ce que** l'énergie à haute fréquence est fournie par des oscillations dans la plage allant sensiblement de 5 à 50 MHz et est injectée dans le matériau de remplissage, dans lequel par modulation supplémentaire en amplitude ou en fréquence, il est possible de réchauffer de manière ciblée et définie différentes composantes dans le matériau de remplissage.

12. Procédé selon la revendication 10 ou 11,
**caractérisé en ce que** le matériau de remplissage est employé comme diélectrique à l'intérieur d'un condensateur à circuit oscillant, et est échauffé.

13. Procédé selon l'une des revendications précédentes,
**caractérisé en ce que** l'enveloppe à forme stable comporte un revêtement, en particulier un revêtement intérieur.

14. Procédé selon la revendication 4,
**caractérisé en ce que** le remplissage de l'enveloppe a lieu à l'encontre d'un bouchon électriquement conducteur à refouler, ou **en ce que**, d'après le principe de "Molch", on introduit après le remplissage un bouchon conducteur de l'électricité ou une plaque de séparation conductrice de l'électricité, qui est complétée, avant une étape de remplissage supplémentaire, avec d'autres bouchons conducteurs de l'électricité ou avec une plaque de séparation conductrice de l'électricité.

15. Procédé selon l'une des revendications précédentes,
**caractérisé en ce que** le matériau de remplissage est déplacé hors de l'enveloppe et pressé contre une butée de stabilisation, et ensuite découpé en tranches.

16. Procédé selon l'une des revendications 1 à 5,
**caractérisé en ce que** le produit traité, sous forme de produit à base de viande, est soumis à un réchauffement résistif régulier, de telle façon qu'il est possible de maintenir dans la viande fraîche des températures au-dessus de 40° C pendant une période prédéterminée, afin d'empêcher des réductions de qualité en raison de processus biochimiques, et de maintenir le degré de moelleux du produit à traiter, également lors des processus de rôtissage ou de cuisson successifs.
